(19) Europäisches Patentamt
European Patent Office
Office européen des brevets

(11) **EP 2 420 614 B1**

(12) **EUROPEAN PATENT SPECIFICATION**

(45) Date of publication and mention of the grant of the patent:
**02.01.2013 Bulletin 2013/01**

(51) Int Cl.:
***D06M 13/352*** (2006.01)  ***D06M 15/356*** (2006.01)
***D06P 5/30*** (2006.01)  ***C09D 179/04*** (2006.01)

(21) Application number: **10015076.2**

(22) Date of filing: **29.11.2010**

(54) **Method for multifunctional finishing of textiles of cellulose or synthetic fibres and blends thereof**

Verfahren zur Funktionalisierung von Textilien aus Zellulose- und Synthetikfasern und deren Kombinationen

Méthode de multi-finition des textiles de fibres synthétiques et leur mélanges

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.08.2010 PL 39214410**

(43) Date of publication of application:
**22.02.2012 Bulletin 2012/08**

(73) Proprietor: **Politechnika Lodzka**
**90-924 Lodz (PL)**

(72) Inventors:
• **Krucinska, Izabella**
**91-857 Lódz (PL)**
• **Urbaniak-Domagala, Wieslawa**
**91-457 Lódz (PL)**
• **Skrzetuska, Ewa**
**90-365 Lódz (PL)**
• **Chrzanowski, Michal**
**98-100 Lask (PL)**

(74) Representative: **Kaczur-Kaczynska, Ewa et al**
**Politechnika Lódzka**
**Rzecznik Patentowy**
**ul. Skorupki 6/8**
**90-924 Lódz (PL)**

(56) References cited:
**US-A1- 2007 065 586**

• **A.BOSCHI, C.AROSIO, I.CUCCHI ET AL: "Properties and Performance of Polypyrrole (PPy)-coated Silk Fibers", FIBERS AND POLYMERS, vol. 9, no. 6, 23 February 2008 (2008-02-23), pages 698-707, XP002663065,**

**Description**

This invention is a method of finishing textiles of cellulose or synthetic fibres and blends thereof that gives them bacteriostatic and antistatic properties and the ability to screen them against the impact of electrostatic field, as well as the properties of chemical sensors for organic liquids and their vapours.

Polypyrolle is a polymer with good temperature and ambient stability, and electrical conductivity properties. It is non-toxic, biocompatible with mammal cells, and biostable. Its valuable chemical, electrical, and optical properties translate into a very broad range of applications - in biology: to produce biosensors, enhance cells growth, create artificial muscles, or control drugs dosage, in materials engineering: to produce composites, conductive in diodes, chemical sensors for liquids, vapours and gases (methanol, ethanol, benzene, acetone, ethyl acetate, toluene), deformation and displacement sensors, electrochrome elements, electrostatic and electromagnetic screens, and solar cells. Each type of polypyrolle's functionality is determined by the kind and admixture of the oxidant, as well as the conditions of the polymer's production.

One known method of supplying electrical conductivity properties to fibre and textile surfaces consists of applying polypyrolle coats during chemical polymerisation of pyrolle (patent description US 4 803 096), electrochemical polymerisation of pyrolle (patent application description DE No. 3 531 019), polymerisation of pyrolle in monomer vapours (patent description US 4 521 450).

In situ application of thin polypyrolle coats on substrates with the use of chemical, electrochemical, and plasmatic methods is also employed for the purpose of multifunctional finishing of such substrates.

Also known is the multifunctional finishing of substrates by applying polypyrolle coats employing the ink-jet printing technique with the use of inks containing polypyrolle dispersion (Sensor and Actuators B 115, 2006, 547-551) or emulsion (Journal of Colloid and Interface Science 296, (2006) 110-117) in water or organic liquids.

The ink-jet printing technique enables printing computer programmed patterns (e.g. paths) on finished products without the masking stage. Coats application using the ink-jet printing technique is characterised by low polymer consumption and high printing speed. Additionally, specific morphology of the coats so applied and formed by a system of drops is conducive to sensory properties (e.g. it significantly improves the conditions of diffusion of gases and vapour molecules, which leads to the coat's high sensitivity to the ambient chemical stimuli that change in time). However, one serious inconvenience of applying polypyrolle in the ink-jet printing technique is its difficult technological processabilty and insolubility in most of the organic solvents. Polypyrolle dispersions and emulsions tend to agglomerate, which poses the risk of clogged nozzles for ejection of picolitre ink drops and the need to clean them, which is troublesome. Therefore, it is necessary to filter the ink containing polypyrolle dispersion or emulsion to obtain dispersion or emulsion with specified distribution of polymer molecule sizes.

The invented method of finishing textiles of cellulose or synthetic fibres and blends thereof that gives them bacteriostatic and antistatic properties and the ability to screen them against the impact of electrostatic field, as well as the properties of chemical sensors for organic liquids and their vapours, which method consists of applying polypyrolle coats during oxidant-initiated chemical polymerisation of pyrolle, is characterised by that the product's surface is first digitally printed over with a crosslinking composition of water emulsion of crosslinking substance and photoinitiator and, after drying the product without access of light and at the temperature not higher than 70°C, the product's surface is simultaneously digitally printed over with two inks containing the components necessary to polymerise pyrolle, one of which is a mixture of alcoholic pyrolle solution and water or alcoholic solution of an anion admixture or admixtures, the other ink being an aqueous oxidant solution, after which the product is dried at the temperature not higher than 70°C and irradiated with Hg lamp radiation with the intensity of 120-240 W/cm or UV-C radiation at the rate of 3-3,5 J/cm$^2$. The crosslinking substance is applied in the amount of 100 g/1000 g water, while the photoinitiator in the amount of 7 g/1000 g water. The anion admixture applied is iron chloride, dodecyl benzenesulfonic acid, sodium dodecylbenzenesulfonate, or p-toluenesulfonic acid, in the amount of 0,05-1 M per 1 M pyrolle, while the oxidant applied is ammonium or potassium persulfate or iron chloride in the amount of 0,1-0,5 M per 1 M pyrolle.

As per the invented method, the components necessary for pyrolle polymerisation are applied on the product's surface in the form of solutions ejected from separate nozzles and on the surface polymer synthesis is initiated by the oxidant applied. On the substrate surface polypyrolle nanoparticles are formed. This method of synthesising polypyrolle is enabled by high reactivity of the monomer and the forming oligomers (pyrolle's oxidation potential is 1,3 eV, and the subsequently forming oligomers are characterised by gradually decreasing oxidation potentials, e.g. for bipyrolle it is 0,4 eV. The polypyrolle that forms on the substrate surface is instantly oxidised, and to keep the system inert it is simultaneously joined by counterions (admixture anions).

The textile product finished as per the invented method gains a series of functionalities: biological activity - similar to that of bacteriostatics - against gram-positive and gram-negative bacteria, antistatic properties, screening against electrostatic fields, as well as it functions as a sensor for liquids and vapours of organic compounds such as methanol, ethanol, acetone, acetonitrile, benzene, and toluene. Textile products finished in this way are human-friendly.

The invented method is illustrated by the following examples.

Example I.

The material selected for the multifunctional finish applying the ink-jet printing method was twill-woven cotton fabric (100%).

To prepare the first ink, 23,2 g dodecyl benzenesulfonic acid (DBSA) solution 70% in isopropanol, dissolved in 300 ml water and ethyl alcohol (containing 0,05 M DBSA), and a solution of 9,5 g (0,05M) p-toluenesulfonic acid in 241,3 ml ethyl alcohol were fed into the thermostatic vessel at 0°C and vigorously stirred with magnetic stirrer. In the course of stirring 69 ml ( M) pyrolle distilled under reduced pressure was added slowly (within approx. 5 minutes). The solution so prepared was further stirred for 20 minutes.

The second ink was a solution of 57 g (0,25 M) ammonium persulfate in 300 ml water.

Also, an emulsion was prepared from 50 g crosslinking substance known by the trade name Ebecryl 2002 and 1,6 g photoinitiator known by the trade name Esacure DP 250, in 500 ml water.

As the first step, the aqueous emulsion of the crosslinking substance and photoinitiator was applied employing the digital printing technique. After drying the fabric at 70°C in the dryer without light access, the fabric was simultaneously printed with both previously prepared inks using the digital printing technique. After drying the fabric at 70°C, it was subjected to crosslinking with the source of radiation UV-C335W for 5 s.

Next the printed fabric's functionalities were assessed.

The biological properties of the printed fabric were assessed in conformity with the EN ISO 20645 standard.

Electrical resistance of the printed fabric's surface was tested in conformity with the EN 1149-1 standard in fixed electric field using concentric electrodes and an electrometer in the following ambient conditions: RH = 25 %, t = 23°C.

The fabric's electrical conductivity was assessed against its surface resistivity $\zeta$ s.

The ink's bond strength on the fabric's surface was assessed after the process of multiple washing (15 washes) in Ahiba Polymat dyeing machine. Each wash was carried out in conformity with the PN-ISO 105-C06 standard in bath (40°C) for 45 minutes.

The printed fabric's screening properties against electrostatic field were tested applying the inductive method as per the PN-EN 1149-3:2007 standard "Protective Clothing. Electrostatic Properties. Part 3: Testing Methods for Charge Loss Measurements (Testing Method 2 - inductive charging).

The printed fabric's screening properties were assessed against two indicators: charge loss time $t_{50\%}$ and screening coefficient S. When the half-loss time $t_{50}<4s$ and/or the screening coefficient S>0,2 the fabric may be deemed to be capable of dissipating electric charge and screening against electrostatic fields (PN-EN 1149-5:2009 standard "Protective Clothing. Electrostatic Properties. Part 5: Material and Design Requirements").

The fabric's sensitivity to chemical stimuli was assessed against changes in the electrical resistance registered on the surface of the printed fabric under the impact of a stimulus (organic liquids and their vapours). The tests of the fabric's surface resistance kinetics were carried out with the use of 2- and 4-point electrodes and Keithley 2000 digital multimeter coupled with a PC.

The printed fabric's sensitivity to liquid vapours was tested at the vapour concentration of 100 ppm. The assumed quantitative indicator of sensory properties was the sensitivity ratio Ss that indicates relative changes in the electrical resistance of the printed fabric's s surface induced by the given type of chemical stimulus.

$$Ss = (\Delta R \, / \, Ro \,) \times 100\%$$

where:

Ss - sensitivity ratio

$\Delta R$ - absolute change of the fabric's electrical resistance, $\Delta R = R-Ro$

R - the fabric's resistance under the impact of external stimulus

Ro - the fabric's resistance before the impact of external stimulus

Tables IA and IB show the indicators characterising the printed fabric in Example I.

Table IA.

| Indicator | Before washing | After 15 washes | Assessment |
|---|---|---|---|
| surface resistivity, $\Omega$, | $4,5*10^4$ | $1,9*10^5$ | permanent antistatic effect |
| stopping zone for *Escherichia coli* bacteria (gram-), mm | 0,5 | 0 | antibacterial effect |

(continued)

| Indicator | Before washing | After 15 washes | Assessment |
|---|---|---|---|
| stopping zone for *Bacillus subtilis* bacteria (gram+), mm | 3 | 1 | antibacterial effect |

Table I B.

| Indicator | Characteristics | | Assessment |
|---|---|---|---|
| charge loss time $t_{50\%}$<br>screening coefficient S | $t_{50\%}$ = <0,01s<br>S = 1,0 | | electrostatic screening effect |
| Sensitivity to liquid chemical substances ratio Ss [%] | Methanol | Ss = 92 | sensor for the indicated liquids |
| | Ethanol | Ss = 83 | |
| | Acetone | Ss = 44 | |
| | Acetonitrile | Ss = 86 | |
| | Toluene | Ss = 21 | |
| | Benzene | Ss = 97 | |
| Sensitivity to organic liquid vapours ratio Ss [%] | Methanol | Ss = 38 | sensor for the indicated liquid vapours |
| | Ethanol | Ss = 42 | |
| | Acetone | Ss = 37 | |
| | Acetonitrile | Ss = 31 | |
| | Toluene | Ss = 25 | |
| | Benzene | Ss = 85 | |

Example II.

The material selected for the multifunctional finish applying the ink-jet printing method was twill-woven cotton fabric (100%).

Two inks and a crosslinking composition were prepared for printing purposes.

To prepare the first ink, 23,2 g dodecyl benzenesulfonic acid (DBSA) solution 70% in isopropanol, dissolved in 300 ml ethyl alcohol (containing 0,05 M DBSA) and a solution of 9,5 g (0,05M) p-toluenesulfonic acid in 241,3 ml ethyl alcohol were fed into the thermostatic vessel at 0°C and vigorously stirred with magnetic stirrer. In the course of stirring 69 ml (1 M) pyrolle distilled under reduced pressure was added slowly (within approx. 5 minutes). The solution so prepared was further stirred for 20 minutes. Next, a solution of 40,5 g (0,25 M) iron chloride ($FeCl_3$) in 300 ml water was made as the second ink.

Also, an emulsion was prepared from 50 g crosslinking substance - Ebecryl 2002 and 1,6 g photoinitiator - Esacure DP 250 in 500 ml water.

As the first step, the aqueous emulsion of the crosslinking substance and photoinitiator was applied employing the digital printing technique. After drying the fabric at 70°C in the dryer without light access, the fabric was simultaneously printed with both previously prepared inks using the digital printing technique. After drying the fabric at 70°C, it was subjected to crosslinking with the source of radiation UV-C335W for 5 s.

The printed fabric's functionalities were assessed as in Example I.

Tables IIA and IIB show the indicators characterising the printed fabric in Example II.

Table II A.

| Indicator | Before washing | After 15 washes | Assessment |
|---|---|---|---|
| surface resistivity, $\Omega$ | $5,1*10^4$ | $3,5*10^5$ | permanent antistatic effect |
| stopping zone for *Escherichia coli* bacteria (gram-), mm | 1 | 0,5 | antibacterial effect |

(continued)

| Indicator | Before washing | After 15 washes | Assessment |
|---|---|---|---|
| stopping zone for *Bacillus subtilis* bacteria (gram+), mm | 3 | 1,5 | antibacterial effect |

Table II B.

| Indicator | Characteristics | | Assessment |
|---|---|---|---|
| charge loss time $t_{50\%}$ <br> screening coefficient S | $t_{50\%}$ = <0,01s <br> S = 0,8 | | electrostatic screening effect |
| Sensitivity to liquid chemical substances ratio Ss [%] | Methanol | Ss= 89 | sensor for the indicated liquids |
| | Ethanol | Ss= 86 | |
| | Acetone | Ss= 53 | |
| | Acetonitrile | Ss= 63 | |
| | Toluene | Ss= 19 | |
| | Benzene | Ss= 53 | |
| Sensitivity to organic liquid vapours ratio Ss [%] | Methanol | Ss= 41 | sensor for the indicated liquid vapours |
| | Ethanol | Ss= 39 | |
| | Acetone | Ss= 41 | |
| | Acetonitrile | Ss= 37 | |
| | Toluene | Ss= 25 | |
| | Benzene | Ss= 22 | |

Example III.

The material selected for the multifunctional finish applying the ink-jet printing method was twill-woven cotton/polyester fabric (70%/30%).

To prepare the first ink, 23,2 g dodecyl benzenesulfonic acid (DBSA) solution 70% in isopropanol, dissolved in 300 ml water and ethyl alcohol (containing 0,05 M DBSA) and a solution of 9,5 g (0,05M) p-toluenesulfonic acid in 241,3 ml ethyl alcohol were fed into the thermostatic vessel at 0°C and vigorously stirred with magnetic stirrer. In the course of stirring 69 ml (1 M) pyrolle distilled under reduced pressure was added slowly (within approx. 5 minutes). The solution so prepared was further stirred for 20 minutes.

The second ink was a solution of 57 g (0,25 M) ammonium persulfate in 300 ml water.

Also, an emulsion was prepared from 50 g crosslinking substance known by the trade name Ebecryl 2002 and 1,6 g photoinitiator known by the trade name Esacure DP 250, in 500 ml water.

As the first step, the aqueous emulsion of the crosslinking substance and photoinitiator was applied employing the digital printing technique. After drying the fabric at 70°C in the dryer without light access, the fabric was simultaneously printed with both previously prepared inks using the digital printing technique. After drying the fabric at 70°C, it was subjected to crosslinking with the source of radiation UV-C335W for 5 s.

The printed fabric's functionalities were assessed as in Example I.

Tables IIIA and IIIB show the indicators characterising the printed fabric in Example III.

Table III A.

| Indicator | Before washing | After 15 washes | Assessment |
|---|---|---|---|
| surface resistivity, $\Omega$ | $2,0*10^3$ | $2,1*10^4$ | permanent antistatic effect |
| stopping zone for *Escherichia coli* bacteria (gram-), mm | 2 | 0,5 | antibacterial effect |

(continued)

| Indicator | Before washing | After 15 washes | Assessment |
|---|---|---|---|
| stopping zone for *Bacillus subtilis* bacteria (gram+), mm | 3 | 2,5 | antibacterial effect |

Table III B.

| Indicator | Characteristics | | Assessment |
|---|---|---|---|
| charge loss time $t_{50\%}$<br>screening coefficient S | $t_{50\%}$ = <0,2s<br>S = 0,99 | | electrostatic screening effect |
| Sensitivity to liquid chemical substances ratio Ss [%] | Methanol | Ss = 89 | sensor for the indicated liquids |
| | Ethanol | Ss = 88 | |
| | Acetone | Ss = 59 | |
| | Acetonitrile | Ss = 89 | |
| | Toluene | Ss = 27 | |
| | Benzene | Ss = 75 | |
| Sensitivity to organic liquid vapours ratio Ss [%] | Methanol | Ss = 43 | sensor for the indicated liquid vapours |
| | Ethanol | Ss = 39 | |
| | Acetone | Ss = 38 | |
| | Acetonitrile | Ss = 38 | |
| | Toluene | Ss = 15 | |
| | Benzene | Ss =57 | |

Example IV.

The material selected for the multifunctional finish applying the ink-jet printing method was twill-woven cotton/polyester fabric (70%/30%).

Two inks and a crosslinking composition were prepared for printing purposes.

To prepare the first ink, 23,2 g dodecyl benzenesulfonic acid (DBSA) solution 70% in isopropanol, dissolved in 300 ml ethyl alcohol (containing 0,05 M DBSA) and a solution of 9,5 g (0,05M) p-toluenesulfonic acid in 241,3 ml ethyl alcohol were fed into the thermostatic vessel at 0°C and vigorously stirred with magnetic stirrer. In the course of stirring 69 ml (1 M) pyrolle distilled under reduced pressure was added slowly (within approx. 5 minutes). The solution so prepared was further stirred for 20 minutes. Next, a solution of 40,5 g (0,25 M) iron chloride ($FeCl_3$) in 300 ml water was made as the second ink.

Also, an emulsion was prepared from 50 g crosslinking substance - Ebecryl 2002 and 1,6 g photoinitiator - Esacure DP 250 in 500 ml water.

As the first step, the aqueous emulsion of the crosslinking substance and photoinitiator was applied employing the digital printing technique. After drying the fabric at 70°C in the dryer without light access, the fabric was simultaneously printed with both previously prepared inks using the digital printing technique. After drying the fabric at 70°C, it was subjected to crosslinking with the source of radiation UV-C335W for 5 s. The printed fabric's functionalities were assessed as in Example I.

Tables IVA and IVB show the indicators characterising the printed fabric in Example IV.

Table IV A

| Indicator | Before washing | After 15 washes | Assessment |
|---|---|---|---|
| surface resistivity, Ω | $3,0*10^4$ | $1,4*10^5$ | permanent antistatic effect |
| stopping zone for *Escherichia coli* bacteria (gram-), mm | 0,5 | 0 | antibacterial effect |

(continued)

| Indicator | Before washing | After 15 washes | Assessment |
|---|---|---|---|
| stopping zone for *Bacillus subtilis* bacteria (gram+), mm | 3 | 3 | antibacterial effect |

Table IV B.

| Indicator | Characteristics | | Assessment |
|---|---|---|---|
| charge loss time $t_{50\%}$<br>screening coefficient S | $t_{50\%}$ = <0,2s<br>S = 0,98 | | electrostatic screening effect |
| Sensitivity to liquid chemical substances ratio Ss [%] | Methanol | Ss = 81 | sensor for the indicated liquids |
| | Ethanol | Ss = 73 | |
| | Acetone | Ss = 55 | |
| | Acetonitrile | Ss = 71 | |
| | Toluene | Ss = 32 | |
| | Benzene | Ss = 49 | |
| Sensitivity to organic liquid vapours ratio Ss [%] | Methanol | Ss = 59 | sensor for the indicated liquid vapours |
| | Ethanol | Ss = 36 | |
| | Acetone | Ss = 37 | |
| | Acetonitrile | Ss = 39 | |
| | Toluene | Ss = 18 | |
| | Benzene | Ss = 26 | |

Example V.

The material selected for the multifunctional finish applying the ink-jet printing method was plain-woven polyester fabric (100%).

To prepare the first ink, 23,2 g dodecyl benzenesulfonic acid (DBSA) solution 70% in isopropanol, dissolved in 300 ml water and ethyl alcohol (containing 0,05 M DBSA) and a solution of 9,5 g (0,05M) p-toluenesulfonic acid in 241,3 ml ethyl alcohol were fed into the thermostatic vessel at 0°C and vigorously stirred with magnetic stirrer. In the course of stirring 69 ml (1 M) pyrolle distilled under reduced pressure was added slowly (within approx. 5 minutes). The solution so prepared was further stirred for 20 minutes.

The second ink was a solution of 57 g (0,25 M) ammonium persulfate in 300 ml water. Also, an emulsion was prepared from 50 g crosslinking substance known by the trade name Ebecryl 2002 and 1,6 g photoinitiator known by the trade name Esacure DP 250, in 500 ml water.

As the first step, the aqueous emulsion of the crosslinking substance and photoinitiator was applied employing the digital printing technique. After drying the fabric at 70°C in the dryer without light access, the fabric was simultaneously printed with both previously prepared inks using the digital printing technique. After drying the fabric at 70°C, it was subjected to crosslinking with the source of radiation UV-C335W for 5 s. The printed fabric's functionalities were assessed as in Example I.

Tables VA and VB show the indicators characterising the printed fabric in Example V.

Table V A.

| Indicator | Before washing | After 15 washes | Assessment |
|---|---|---|---|
| surface resistivity, $\Omega$ | $1,7*10^2$ | $1,2*10^3$ | permanent antistatic effect |
| stopping zone for *Escherichia coli* bacteria (gram-), mm | 2 | 0,5 | antibacterial effect |

(continued)

| Indicator | Before washing | After 15 washes | Assessment |
|---|---|---|---|
| stopping zone for *Bacillus subtilis* bacteria (gram+), mm | 5 | 4 | antibacterial effect |

Table V B.

| Indicator | Characteristics | | Assessment |
|---|---|---|---|
| charge loss time $t_{50\%}$<br>screening coefficient S | $t_{50\%}$ = <0,2s<br>S = 0,97 | | electrostatic screening effect |
| Sensitivity to liquid chemical substances ratio Ss [%] | Methanol | Ss = 87 | sensor for the indicated liquids |
| | Ethanol | Ss = 85 | |
| | Acetone | Ss = 61 | |
| | Acetonitrile | Ss = 78 | |
| | Toluene | Ss = 28 | |
| | Benzene | Ss = 67 | |
| Sensitivity to organic liquid vapours ratio Ss [%] | Methanol | Ss = 31 | sensor for the indicated liquid vapours |
| | Ethanol | Ss = 35 | |
| | Acetone | Ss = 38 | |
| | Acetonitrile | Ss = 29 | |
| | Toluene | Ss = 14 | |
| | Benzene | Ss = 56 | |

Example VI.

The material selected for the multifunctional finish applying the ink-jet printing method was plain-woven polyester fabric (100%).

Two inks and a crosslinking composition were prepared for the printing purposes.

To prepare the first ink, 23,2 g dodecyl benzenesulfonic acid (DBSA) solution 70% in isopropanol, dissolved in 300 ml ethyl alcohol (containing 0,05 M DBSA) and a solution of 9,5 g (0,05M) p-toluenesulfonic acid in 241,3 ml ethyl alcohol were fed into the thermostatic vessel at 0°C and vigorously stirred with magnetic stirrer. In the course of stirring 69 ml (1 M) pyrolle distilled under reduced pressure was added slowly (within approx. 5 minutes) . The solution so prepared was further stirred for 20 minutes. Next, a solution of 40,5 g (0,25 M) iron chloride ($FeCl_3$) in 300 ml water was made as the second ink.

Also, an emulsion was prepared from 50 g crosslinking substance - Ebecryl 2002 and 1,6 g photoinitiator - Esacure DP 250 in 500 ml water.

As the first step, the aqueous emulsion of the crosslinking substance and photoinitiator was applied employing the digital printing technique. After drying the fabric at 70°C in the dryer without light access, the fabric was simultaneously printed with both previously prepared inks using the digital printing technique. After drying the fabric at 70°C, it was subjected to crosslinking with the source of radiation UV-C335W for 5 s. The printed fabric's functionalities were assessed as in Example I.

Tables VIA and VIB show the indicators characterising the printed fabric in Example VI.

Table VI A.

| Indicator | Before washing | After 15 washes | Assessment |
|---|---|---|---|
| surface resistivity, $\Omega$ | $2,9*10^3$ | $9,2*10^3$ | permanent antistatic effect |
| stopping zone for *Escherichia coli* bacteria (gram-), mm | 0,5 | 0 | antibacterial effect |

(continued)

| Indicator | Before washing | After 15 washes | Assessment |
|---|---|---|---|
| stopping zone for *Bacillus subtilis* bacteria (gram+), mm | 3 | 1 | antibacterial effect |

Table VI B.

| Indicator | Characteristics | | Assessment |
|---|---|---|---|
| charge loss time $t_{50\%}$ <br> screening coefficient S | $t_{50\%}$ = <0,2s <br> S = 1,0 | | electrostatic screening effect |
| Sensitivity to liquid chemical substances ratio Ss [%] | Methanol | Ss = 87 | sensor for the indicated liquids |
| | Ethanol | Ss = 77 | |
| | Acetone | Ss = 56 | |
| | Acetonitrile | Ss = 78 | |
| | Toluene | Ss = 37 | |
| | Benzene | Ss = 53 | |
| Sensitivity to organic liquid vapours ratio Ss [%] | Methanol | Ss = 61 | sensor for the indicated liquid vapours |
| | Ethanol | Ss = 37 | |
| | Acetone | Ss = 38 | |
| | Acetonitrile | Ss = 38 | |
| | Toluene | Ss = 21 | |
| | Benzene | Ss = 27 | |

The chart below illustrates the printed fabric's resistance response to methanol in Example II.

deposition of methanol on the printed fabric

**Claims**

1.    The method of finishing textiles of cellulose or synthetic fibres and blends thereof that gives them bacteriostatic and antistatic properties and the ability to screen them against the impact of electrostatic field, and the properties of chemical sensors for organic liquids and their vapours which method consists of applying polypyrolle coats during oxidant-initiated chemical polymerisation of pyrolle, is unique in that the product's surface is first digitally printed over with a crosslinking composition of water emulsion of crosslinking substance and photoinitiator and, after drying the product without access of light and at the temperature not higher than 70°C, the product's surface is simultaneously digitally printed over with two inks containing the components necessary to polymerise pyrolle, one of which is a mixture of alcoholic pyrolle solution and water or alcoholic solution of an anion admixture or admixtures, the other ink being an aqueous oxidant solution, after which the product is dried at the temperature not higher than 70°C and irradiated with Hg lamp radiation with the intensity of 120-240 W/cm or UV-C radiation at the rate of 3-3,5 J/cm$^2$.

2. The method, as claimed under 1 herein above, is unique in that the crosslinking substance is applied in the amount of 100 g/1000 g water, while the photoinitiator in the amount of 7 g/1000 g water.

3. The method, as claimed under 1 herein above, is unique in that the anion admixture applied is iron chloride, dodecyl benzenesulfonic acid, sodium dodecylbenzenesulfonate, or p-toluenesulfonic acid, in the amount of 0,05-1 M per 1 M pyrolle.

4. The method, as claimed under 1 herein above, is unique in that the oxidant applied is ammonium or potassium persulfate or iron chloride in the amount of 0,1-0,5 M per 1 M pyrolle.

**Patentansprüche**

1. Veredlungsart der Textilien aus Zellulose- und synthetischen Fasern und deren Mischungen, bei der den Textilien bakteriostatische, antistatische, gegen die Einwirkung des elektrostatischen Felds abschirmende Eigenschaften verliehen werden, wie auch die Eigenschaften der chemischen Sensoren unter dem Aspekt des Auftretens organischer Flüssigkeiten und deren Dämpfe, beruhend auf Herausbildung an der Textilienoberfläche einer Polypyrrolschicht im Weg von chemischer Polymerisation von Pyrrol, initiiert durch Oxydator, charakteristisch dadurch, dass an die ProduktOberfläche zunächst eine Vernetzungskomposition in Form von wässriger Emulsion von Vernetzungsstoff und Photoinitiator aufgetragen wird, aufgrund von Digidruckverfahren, und nach Trocknung ohne Lichtzutritt in einer Temperatur von nicht mehr als 70°C, wobei die Oberfläche des Produkts gleichzeitig mit zwei Tinten bedruckt wird, von denen eine Mischung von Alkohol-Pyrrol-Lösung und wässriger Anion-Beimischungslösung oder -lösungen ist, und die andere Tinte ist eine wässrige Oxydator- Lösung, unter Anwendung von Digidruckverfahren, wonach das Produkt in einer Temperatur von weniger als 70°C getrocknet und der Einwirkung einer Hg-Lampenstrahlung mit Leistung von 120-240 W/cm oder UV -C-Strahlung bei Anwendung einer Dosis von 3-3,5 J/cm$^2$ unterzogen wird.

2. Verfahren gem. Anspruch 1, charakteristisch dadurch, dass die Vernetzungssubstanz in einer Menge von 100 g/ 1000 g Wasser, und Photoinitiator in einer Menge von 7 g/1000 g Wasser verwendet wird.

3. Verfahren gem. Anspruch 1, charakteristisch dadurch, dass als Anionbeimischung Eisenchlorid, Dodecylbenzolsulfonsäure, Natriumdodecilbenzolsulfonat oder p-Toluolsulfonsäure verwendet wird, in einer Menge von 0,05-1 M je 1 M Pyrrol.

4. Verfahren gem. Anspruch 1, charakteristisch dadurch, dass als Oxydator Ammoniumpersulfat oder Natriumpersulfat oder Eisenchlorid verwendet wird, in einer Menge von 0,1-0,5 M je 1 M Pyrrol.

**Revendications**

1. La façon de finition des textiles en fibres en cellulose, synthétiques et leurs compositions qui leur attribue les propriétés bactériostatiques, antistatiques, de blindage contre les effets du champ électrostatique et les propriétés des capteurs chimiques concernant la présence de liquides organiques et leurs vapeurs, consistant à créer sur la surface des textiles la couche de polypyrrole par polymérisation chimique du polypyrrole initiée par l'oxydant, **caractérisé en ce que** sur la surface du produit d'abord il est appliquée la composition de réticulation sous forme d'émulsion de la substance réticulant et de photo-initiateur, par la technologie d'impression numérique et après le séchage du produit sans l'accès de la lumière à une température inférieure à 70°C la surface est imprimée en même temps de deux encres dont l'un constitue la composition de la solution alcoolique polypyrrole et de la solution aqueuse ou alcoolique de la solution de l'impureté ou des impuretés anioniques et l'autre constitue la solution aqueuse de l'oxydant, en utilisant la technologie d'impression numérique, en considérant que le produit est séché à une température inférieure à 70°C et soumis à l'action du rayonnement de la lampe Hg de la puissance de 120 à 240 W/cm ou du rayonnement UV-C en utilisant la dose de 3-3,5 J/cm $^2$

2. La façon selon la revendication nº 1, **caractérisée en ce que** la substance réticulant est utilisée en quantité de 100 g/1000 g d'eau et le photo-initiateur en une quantité de 7 g/1000 g d'eau.

3. La façon selon la revendication nº 1, **caractérisée en ce que** en tant qu'impureté anionique il est utilisé le chlorure de fer, l'acide dodécylbenzènesulfonique, le dodecylbenzenesulphonate de sodium ou l'acide paratoluènesulfonique en une quantité 0,05 à 1 M à 1 M de polypyrrole.

4. La façon selon la revendication nº 1, **caractérisée en ce qu'**on utilise en tant qu'oxydant la persulfate d'ammonium ou de potassium ou le chlorure de fer en une quantité de 0,1- à 0,5 M à 1 M de polypyrrole.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4803096 A
- DE 3531019
- US 4521450 A

**Non-patent literature cited in the description**

- *Sensor and Actuators B,* 2006, vol. 115, 547-551
- *Journal of Colloid and Interface Science,* 2006, vol. 296, 110-117